(19) Europäisches Patentamt
European Patent Office
Office européen des brevets

(11) Publication number: 0 164 494 B1

# (12) EUROPEAN PATENT SPECIFICATION

(45) Date of publication of the patent specification: 26.08.87

(51) Int. Cl.⁴: B 65 G 47/84, B 65 G 47/57, B 65 G 17/12, B 65 G 17/32, A 23 G 9/28, F 25 D 25/04

(21) Application number: 85101844.0

(22) Date of filing: 31.10.81

(60) Publication number of the earlier application in accordance with Art. 76 EPC: 0078342

## (54) System for conveying conical articles.

(43) Date of publication of application: 18.12.85 Bulletin 85/51

(45) Publication of the grant of the patent: 26.08.87 Bulletin 87/35

(84) Designated Contracting States: DE FR GB IT NL

(56) References cited:
BE - A - 746 791
GB - A - 1 547 930
US - A - 2 771 174
US - A - 2 880 850
US - A - 4 188 768

(73) Proprietor: YAMAKYU AUTOMATICS CO., LTD., 573, Saime Kita 1-chome, Takatsuki City Osaka (JP)

(72) Inventor: Oizumi, Yoshio, 14-8, Terada-cho, Ibaragi City Osaka (JP)

(74) Representative: Patentanwälte TER MEER - MÜLLER - STEINMEISTER, Mauerkircherstrasse 45, D-8000 München 80 (DE)

EP 0 164 494 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a system for conveying conical articles comprising a conveyor belt carrying a number of stands arranged equidistantly on the conveyor belt and each having a receiving portion for fitting the conical article therein with the tapered end of the article directed downward, the systen further comprising a delivering assembly including a conveyor which is raised toward its downstream end for removing the conical articles from the conveyor belt.

The US-A-2 880 850 describes a conveying system wherein the conical articles are held with their upper portions between two parallel chains. The conveyor of the delivering assembly is a slanting belt which is arranged between the two chains and engages the lower tips of the conical articles so that the articles are lifted above the chains while moving toward the downstream end of the conveyor. Since, according to this prior art, the conical articles are unstably supported on the slanting conveyor belt, the articles are likely to be damaged in the delivering assembly.

It is an objet of the present invention to provide a delivering assembly which is simple in construction, inexpensive to make and operable almost free of any trouble and which permits to remove the conical articles from the conveying system properly free of any damage even if the articles are made of paper and therefore susceptible to deformation or damage.

This object is achieved by a system of the type mentioned above, characterized in that said conveyor of said delivering assembly comprises a pair of opposed endless chains arranged on the opposite sides of a path of transfer of the conical articles and spaced apart from each other by a larger distance in an upstream section and by a smaller distance in a downstream section, and support pieces projecting from the chains and engageable with an upper end peripheral portion of the conical article to lift the article from the receiving portion with the rise of the endless chains.

In a preferred embodiment, two support pieces on one of the chains and two support pieces on the other chain provide a group of four support pieces for supporting the conical article at four upper portions thereof with bent portions at the lower ends of the support pieces.

A preferred embodiment of the invention is described below with reference to the drawings wherein:

Fig. 1 is an overall view showing a conveying system;

Fig. 2 is a perspective view showing a support stand as attached to a conveyor belt;

Fig. 3 is a view in section taken along the line III-III in Fig. 2;

Fig. 4 is a view in section taken along the line IV-IV in Fig. 2;

Fig. 5 is a front view showing a delivering assembly;

Fig. 6 is a plan view showing the spacing between guide rods 6 in Fig. 5;

Fig. 7 is a view in section taken along the line VII-VII in Fig. 5; and

Fig. 8 is a perspective view showing another embodiment.

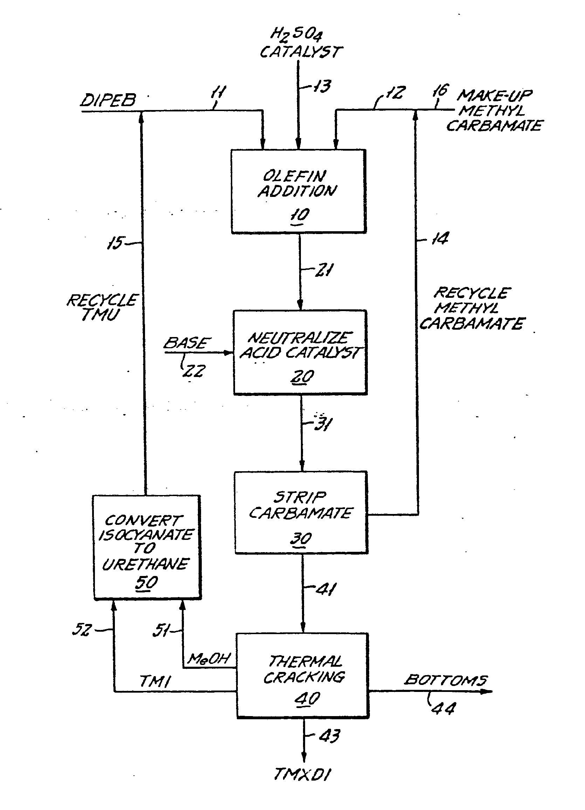

Fig. 1 shows a conveyor belt 1 provided within a food quick freezing chamber, and an article feeder 3 and an article delivering assembly 2 above the belt 1.

The conveyor belt 1 includes a helically descending conveyor section 1a and a helically ascending conveyor section 1b which are connected together at their upper ends and lower ends and is driven by a motor 16 for circulation.

With the present embodiment, conical paper containers having an ice cream mixture placed therein are successively transferred onto support stands 8 on the conveyor belt 1 by the feeder 3, circulated through the interior of the freezing chamber over a period of time needed for solidifying the ice cream mixture and lifted from the support stands 8 by the delivering assembly 2 disposed adjacent the feeder 3 for delivery.

The present invention can be embodied for conveying not only the ice cream container mentioned but also any other conical articles. The conveyor belt can of course be circulated in a horizontal plane.

As seen in Fig. 2, the conveyor belt 1 comprises an endless drive chain 14 reeved around wheels 17, and support bars 10 pivotably supported on the chain 14 and equidistantly arranged. Branches 11, 12 extend from the opposite sides of each support bar 10.

A connecting rod 15 fixed to the branches 11 on one side of one bar 10 is slidably fitted in slots 13 formed in the branches 12 on the other side of another support bar 10 adjacent the bar 10.

The conveyor belt 1 travels smoothly at the corners of the path of transport in a circular arc form, with the distance between the adjacent support bars 10, 10 increased at their outer ends and decreased at their inner ends.

The article support stand 8 comprises a pair of opposed arched legs 9, 9 which are connected together by a bridge plate 80. The legs 9 and bridge plate 80 are all made of synthetic resin, such as nylon 1018, which is lightweight and resistant to low temperatures.

The bridge plate 80 has a plurality of receiving portions 83 in conformity with the shape of the article to be conveyed and arranged on a line perpendicular to the direction of transport.

Since the article to be transported is an ice cream container C in the form of an inverted cone, the receiving portion 83 has a conical wall 82 projecting downward from the periphery of a circular aperture 81 formed in the bridge plate 80.

Slits 84, 84 for attaching the legs 9, 9 are formed in opposite side portions of the bridge plate 80 in parallel to each other.

Each of the legs 9, 9 includes two leg pieces 91 which are bent downward to an arch form towards the free ends. The leg is formed on its inner side with a reinforcing rib 92. At one corner of the inner side of the leg, the rib 92 is cut out as indicated at 90 in Fig. 4. The leg piece 91 extending from the corner 90 is biased outward at all times as indicated in broken lines by the elastic restoring force of the resin.

The leg pieces 91, 91 are formed on the inner side of their lower ends with recessed engaging portions

93, 94 in which the support bar 10 and connecting rod 15 of the conveyor belt 1 are fittable respectively. The engaging portion 93 is channel-shaped to receive the support bar 10 therein, while the other engaging portion 94 is semi-circular to receive the rod 15 therein.

The leg 9 has at its top a projection 95 which is fittable in the slit 84 of the bridge plate 80.

As shown in Fig. 3, each of the leg pieces 91 have a midportion of increased width, 96, having recesses 97 in the side edges.

The leg 9 has a ring 98 made of the same material as the leg, fitted around the leg pieces 91 and vertically movable. The ring 98 has on its inner side projections 99 engageable in and disengageable from the recesses 97 of the leg pieces 91.

To assemble the support stand 8 and attach the stand to the conveyor belt 1, the ring 98 is first fitted around the leg 9, and the projection 95 on the leg is then fitted in the slit 84 of the bridge plate 80. When desired , the projection 95 may be fixed to the plate 80 with an adhesive.

The engaging portions 93, 94 at the lower ends of the leg pieces 91 are fitted to the connecting rod 15 and support bar 10 of the belt 1 sidewise by forcing the leg pieces inward with the hand. The ring 98 is lowered to fit the projection 99 thereon in the recesses 97 of the leg pieces 91, whereby the leg pieces 91 are prevented from expansion. With the legs 9, thus clamping the support bar 10 and connecting rod 15, the support stand 8 is attached to the conveyor belt 1 by the four leg pieces 91.

The feeder 3 is disposed at the corner of the lower end of the ascending conveyor section 1b of the conveyor belt 1.

Adjacent the feeder 3, the delivering assembly 2 is provided above the conveyor belt 1 at an upstream location.

The delivering assembly 2 comprises two endless chains 20, 20 arranged side by side at the opposite sides of each path of transfer of containers C and support pieces 25 attached to the chains and engageable with containers C.

Each of the chains 20 is reeved around an upstream sprocket 22, downstream sprocket 21 and tension sprocket 23 and is driven at the same speed of travel as the conveyor belt 1 by a motor 18 equipped with speed reduction means and coupled to the sprocket 21.

Above the lower sections 20a, 20a of the chains 20, guide bars 6, 6 are arranged as opposed to each other for guiding the travel of the lower chain sections 20a.

The guide bars 6, 6 have a horizontal upstream section 61 in parallel to the conveyor belt 1 and a slanting downstream section 62 continuous with the horizontal section 61 hand extending progressively upward.

In the horizontal section 61, the guide bars 6, 6 are slightly bent inward toward each other approximately at the middle portions thereof as seen in Fig. 6. At the upstream side of this section 61, the distance 64 between the guide bars 6, 6 in parallel is slightly larger than the largest diameter of the conical container C. The bars 6 extend from their bent portions 63 toward the downstream end of the horizontal section 61 with a progressively reducing spacing. The distance 65 between the bars 6, 6 at the downstream end of the horizontal section 61 is slightly smaller than the largest diameter of the conical container C.

The bars 6, 6 further extend into the slanting section 62 as spaced apart by the smaller distance 65. The bars 6, 6 then extend downstream at an increasing spacing and thereafter extend in parallel as spaced apart by a distance larger than the largest diameter of the container C.

Each of the endless chains 20, 20 has pairs of support pieces 25 which are arranged at the same spacing as the stands 8 on the belt conveyor 1. These support pieces have forward ends which are bent at a right angle forward and rearward alternately. The bent ends 26, 26 of the support pieces 25, 25a in each pair on the chain 20 are opposed to each other as spaced apart by a distance 27 which is smaller than the largest diameter of the container C. One pair of support pieces 25, 25a on one of the endless chains 20 and one pair of support pieces 25, 25a on the other chain 20, i.e. four support pieces 25, 25a, form a group to pick up a container C by holding an upper portion thereof. When the chains 20, 20 travel along the horizontal section 61 of the guide bars 6, the bent ends 26 of the support pieces 25 are at a level slightly lower than the upper end of the container C on the conveyor belt 1.

The chains 20 and the belt 1 are driven with such timing that in the horizontal section 61 of the guide bars 6, one group of support pieces 25, 25a on the lower chain sections 20a will be positioned immediately above the receiving portion 83, in the corresponding path of transport, of the support stand 8 on the belt 1.

Fig. 3 shows another embodiment of support pieces 25. Each of the support pieces 25 shown has a circular arc holder 28 at its free end. The container C is lifted as held between the opposed holders 28, 28 on endless chains 20,20. Thus two support pieces 25,25 coact as a group to lift the container C.

Container C filled with an ice cream mixture placed into the support stands 8 of the conveyor belt 1 by means of the feeder 3. Because the support stand 8 is attached in s stable position to the conveyor belt 1 by the four leg pieces 91 and is therefore almost free from the influence of the vibration or shake of the belt 1, the ice cream mixture will not overflow the container.

While the container C travels through the ascending conveyor section 1b and descending conveyor section 1a over a specified period of time, the ice cream mixture is frozen and solidified.

When the container C passes below the delivering assembly 2 in the upstream section of the endless chains 20, 20, the container upper portion is loosely placed into the space surrounded by the group of support pieces 25, 25a, 25, 25a extending downward from the opposed chains 20, 20, since the spacing 64 between the chain in this section is larger than the largest diameter of the container C. As the conveyor belt 1 and the chains 20 further travel at equal speeds in this state, the support pieces 25, 25a of the group come into contact with the upper por-

tion outer periphery of the container C where the chains 20, 20 are spaced apart by a reduced distance. When the chains 20 further ascend along the slanting section 62 of the guide bars 6, the group of support pieces 25, 25a lifts the container C from the receiving portion 83 of the stand 8.

Since the container C is in the form of a cone having a progressively increasing diameter toward its upper end, the container will not slip off the four support pieces 25, 25a.

The distance between the endless chains 20, 20 toward the downstream end of the slanting section 62 is again larger than the largest diameter of the container C, so that the container C falls off the support pieces 25, 25a, slides down a chute 29 provided therebelow and is thereby discharged from the freezing chamber.

Because the ice cream in the container C has been completely solidified by this time, no objection will result even if the container is brought into a horizontal position. When an empty stand 8 passes below the feeder 3, containers C are fitted therein again. Through the repetition of the above operation, the ice cream mixture filling the conical containers can be frozen efficiently.

By virtue of the variation of the spacing between the endless chains 20, 20 and the inclination thereof, the support pieces 25 of the delivering assembly 2 automatically engage the outer periphery of an upper portion of the conical container C to lift the container C from the stand 8. The assembly 2 is therefore very simple in construction, inexpensive to make and operable almost free of any trouble.

Since the conical container is lifted as held between a plurality of support pieces 25 utilizing the characteristic shape of the container C that it has a progressively increasing diameter toward the upper end, the container can be removed from the conveyor belt properly free of any damage even if made of paper and therefore susceptible to deformation or damage.

The support stand 8 has a pair of arched legs 9, 9 which are connected together by a bridge plate 80 formed with receiving portions 83 and is supported at four points, with two leg pieces 91 of each leg 9 clamping the connecting rod 15 and support bar 10 of the conveyor belt 1. Articles can therefore be supported on the stand with increased stability and reduced jolts during transport. When the ring 98 fitting around each leg 9 is pulled up to disengage the projections 99 on the ring 98 from the recessed portions 87 of the leg pieces 91, one leg piece 91 moves away from the other leg piece 91 by virtue of the elastic restoring force of the resin. Thus the stand 8 has the advantage that it is removable from the belt easily.

**Claims**

1. A system for conveying conical articles (C) comprising a conveyor belt (1) carrying a number of stands (8) arranged equidistantly on the conveyor belt and each having a receiving portion (83) for fitting the conical article therein with the tapered end of the article directed downward, the system further comprising a delivering assembly (2) including a conveyor (20) which is raised toward its downstream end for removing the conical articles from the conveyor belt (1), characterized in that said conveyor of said delivering assembly comprises a pair of opposed endless chains (20) arranged on the opposite sides of a path of transfer of the conical article and spaced apart from each other by a larger distance in an upstream section and by a smaller distance in a downstream section, and support pieces (25) projecting from the chains (20) and engageable with an upper end peripheral portion of the conical article to lift the article from the receiving portion (83) with the rise of the endless chains (20).

2. A conveying system as defined in claim 1, characterized in that two support pieces (25, 25a) on one of the chains (20) and two support pieces (25, 25a) on the other chain (20) provide a group of four support pieces (25, 25a) for supporting the conical article at four upper portions thereof with bent portions (26) at the lower ends of the support pieces.

3. A conveying system as defined in claim 1 or 2, characterized in that the conveyor belt comprises a multiplicity of support bars (10) arranged side by side and each having branches (11) and branches (12) projecting from the opposite sides of the support bar, and a connecting rod (15) attached to the branches (11) on one side of each support bar (10) is engaged with the branches (12) on the other side of the adjacent support bar (10).

4. A conveying system as defined in claim 3, characterized in that the stand (8) comprises a pair of arched legs (9) provided at its opposite ends and each having leg pieces (91) and a bridge plate (80) interconnecting the upper ends of the legs (9) and having article receiving portions (83), the lower ends of the leg pieces (91) being formed on the other side thereof with recessed engaging portions (93, 94) for fitting therein the support bar (10) and the connecting rod (15) respectively, each of the arched legs (9) having a ring (98) fitting around the two leg pieces (91) and movable upward or downward.

5. A conveying system as defined in claim 4, characterized in that the inner side of the ring (98) and the leg pieces (91) are formed with projections (99) and recessed portions (97) engageable with and disengageable from each other.

**Patentansprüche**

1. System zum Fördern konischer Gegenstände (C) mit einem Förderband (1), das eine Anzahl in gleichmässigen Abständen auf dem Förderband angeordneter Ständer (8) trägt, die jeweils einen Aufnahmebereich (83) zur Aufnahme des konischen Gegenstands mit dem verjüngten Ende des Gegenstands nach unten aufweisen, und mit einer Ausgabeanordnung (2) mit einem zu seinem stromabwärtigen Ende hin ansteigenden Förderer (20) zur Abnahme der konischen Gegenstände von dem Förderband (1), dadurch gekennzeichnet, dass der Förderer der Ausgabeanordnung zwei einander gegenüberliegend auf entgegengesetzten Seiten einer Be-

wegungsbahn der konischen Gegenstände angeordnete endlose Ketten (20), die in einem stromaufwärtigen Abschnitt einen grösseren Abstand und in einem stromabwärtigen Abschnitt einen kleineren Abstand zueinander aufweisen, und von den Ketten (20) vorspringende Halteglieder (25) aufweist, die mit einem Umfangsabschnitt am oberen Ende des konischen Gegenstands in Eingriff treten, um den Gegenstand mit dem Anstieg der endlosen Ketten (20) aus dem Aufnahmebereich (83) herauszuheben.

2. Fördersystem nach Anspruch 1, dadurch gekennzeichnet, dass zwei Halteglieder (25, 25a) an einer der Ketten (20) und zwei Halteglieder (25, 25a) an der anderen Kette (20) eine Gruppe aus vier Haltegliedern (25, 25a) bilden, die den konischen Gegenstand mit an den unteren Enden der Halteglieder angeordneten gekrümmten Abschnitten (26) im oberen Bereich an vier Stellen abstützen.

3. Fördersystem nach Anspruch 1 oder 2, dadurch gekennzeichnet, dass das Förderband mehrere Seite an Seite angeordnete Stützstäbe (10) aufweist, die jeweils mit von entgegengesetzten Seiten des Stützstabes vorspringenden Armen (11, 12) versehen sind, und dass eine an den Armen (11) auf einer Seite jedes Stützstabes (10) angebrachte Verbindungsstange (15) mit den Armen (12) auf der anderen Seite des benachbarten Stützstabes (10) in Eingriff steht.

4. Fördersystem nach Anspruch 3, dadurch gekennzeichnet, dass der Ständer (8) zwei an seinen entgegengesetzten Enden angeordnete, jeweils mit Schenkeln (91) versehene bügelförmige Füsse (9) und eine Brückenplatte (80) aufweist, die die oberen Enden der beiden Füsse (9) verbindet und die Aufnahmebereiche (83) zur Aufnahme der Gegenstände aufweist, dass die unteren Enden der Schenkel (91) an ihren Aussenseiten mit ausgenommenen Eingriffsbereichen (93, 94) für den Passeingriff des Stützstabes (10) bzw. der Verbindungsstange (15) versehen sind und dass die Füsse (9) je einen um die beiden Schenkel (91) anliegenden , aufwärts und abwärts beweglichen Ring (98) aufweisen.

5. Fördersystem nach Anspruch 4, dadurch gekennzeichnet, dass die Innenflächen des Ringes (98) und die Schenkel (91) mit lösbar ineinandergreifenden Vorsprüngen (99) und Ausnehmungen (97) versehen sind.

**Revendications**

1. Système pour transporter des articles coniques (C), comprenant une courroie de transport (1) déplaçant un nombre de supports (8) disposés de façon équidistante sur la courroie de transport, chacun d'eux ayant une partie réceptrice (83) pour recevoir l'article conique disposé à l'intérieur avec son extrémité conique dirigée vers le bas, le système comprenant de plus un système de distribution (2) comportant un transporteur (20) qui s'élève tout près de son extrémité d'aval pour retirer le articles coniques de la bande transporteuse (1), caractérisé par le fait que ledit transporteur dudit système de distribution comporte une paire de chaînes sans fin opposées (20) disposées sur les côtés opposés d'un chemin de transport de l'article conique et espacées l'une de l'autre par une distance plus grande dans une section d'amount, et par une distance plus petite dans une section d'aval, et des pièces de support (25) accrochées aux chaînes (20) et pouvant s'assembler avec une partie périphérique supérieure de l'article conique, pour soulever l'article conique depuis la partie réceptrice (83) avec la montée des chaînes sans fin (20).

2. Système de transport défini selon la revendication 1, caractérisé par le fait que deux pièces de support (25, 25a) sur l'une des chaînes (20) et deux pièces de support (25, 25a) sur l'autre chaîne (20) constituent un groupe de quatre pièces de support (25, 25a) pour supporter l'article conique en quatre parties supérieures de celui-ci avec des parties courbes (26) eau extrémités inférieures des pièces de support.

3. Système de transport défini selon les revendications 1 ou 2, caractérisé par le fait que la courroie de transport comprend une multiplicité de barres de support (10) disposées côté à côté et ayant chacune des branches (11) et des branches (12) s'étendant des côtés opposés de la barre de support, et une barre d'assemblage (15) fixée aux branches (11) sur une côté de chaque barre de support (10) et étant engagée dans les branches (12) sur l'autre côté de la barre de support adjacente (10).

4. Système de transport défini selon la revendication 3, caractérisé par le fait que le support (8) comporte une paire de jambes arquées (9) prévues à ses extrémités opposées et ayant chacune des pièces (91) et une plaque (80) en forme de pont reliant les extrémités supérieures des jambes (9) et ayant des parties (83) réceptrices d'articles, les extrémités inférieures des pièces (91) comportant sur leur autre côté des parties évidées (93, 94) destinées à recevoir la barre de support (10) et la barre d'assemblage (15) respectivement, chacune des jambes arquées (9) ayant un anneau (98) s'adaptant autour des deux pièces (91) et pouvant se déplacer vers le haut ou vers le bas.

5. Système de transport défini selon la revendications 4, caractérisé par le fait que le côté intérieur de lanneau (98) et les pièces (91) comportent des saillies (99) et des parties en creux (97) pouvant être assemblées les une avec les autres et être déassemblées les unes des autres.

FIG.1

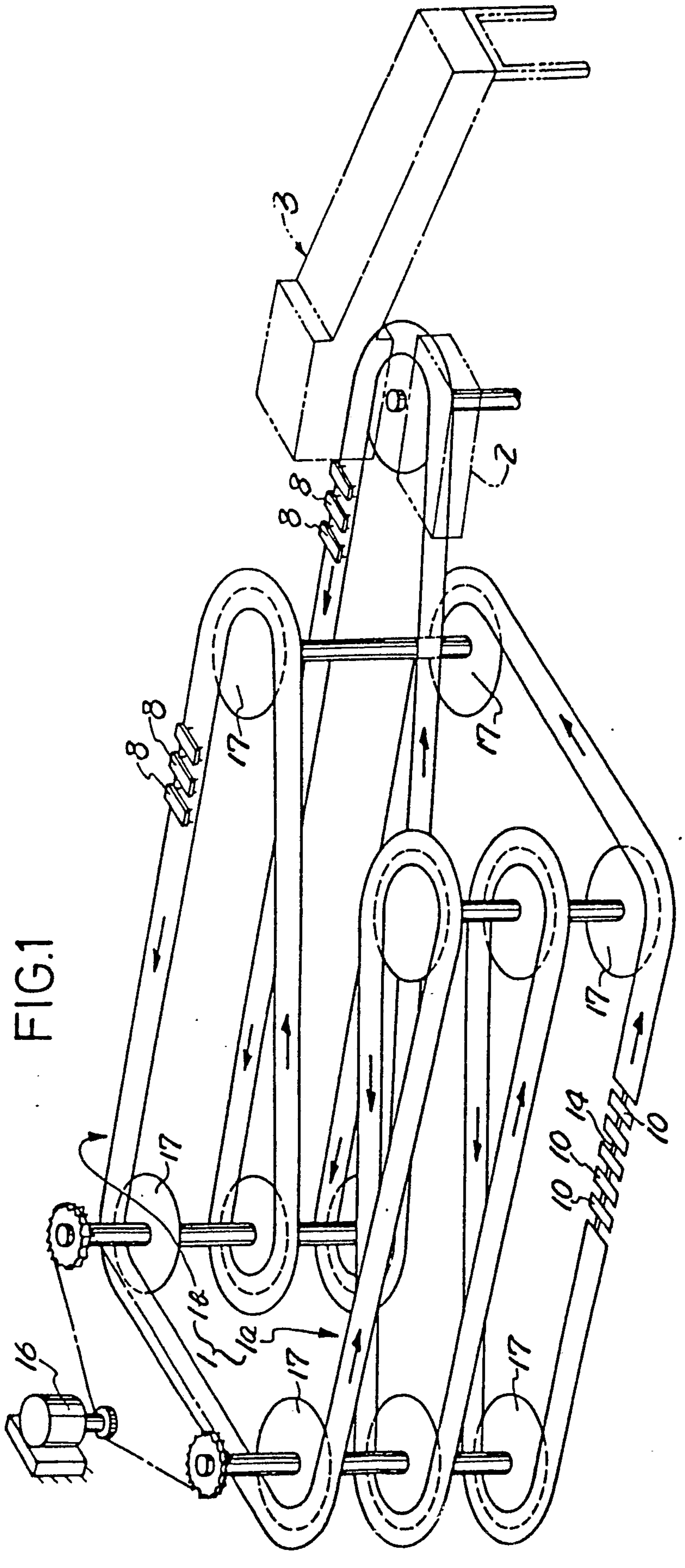

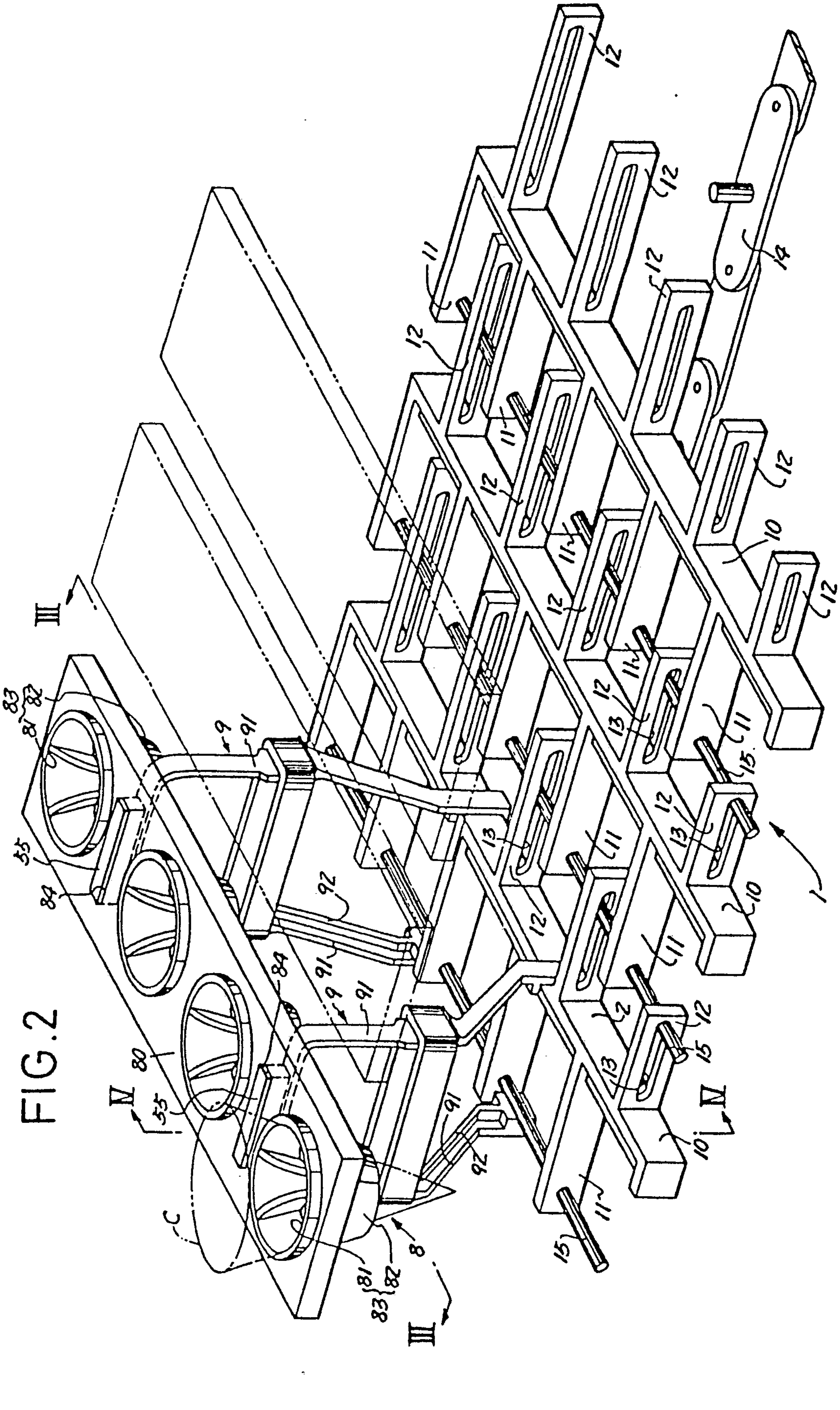


FIG.2

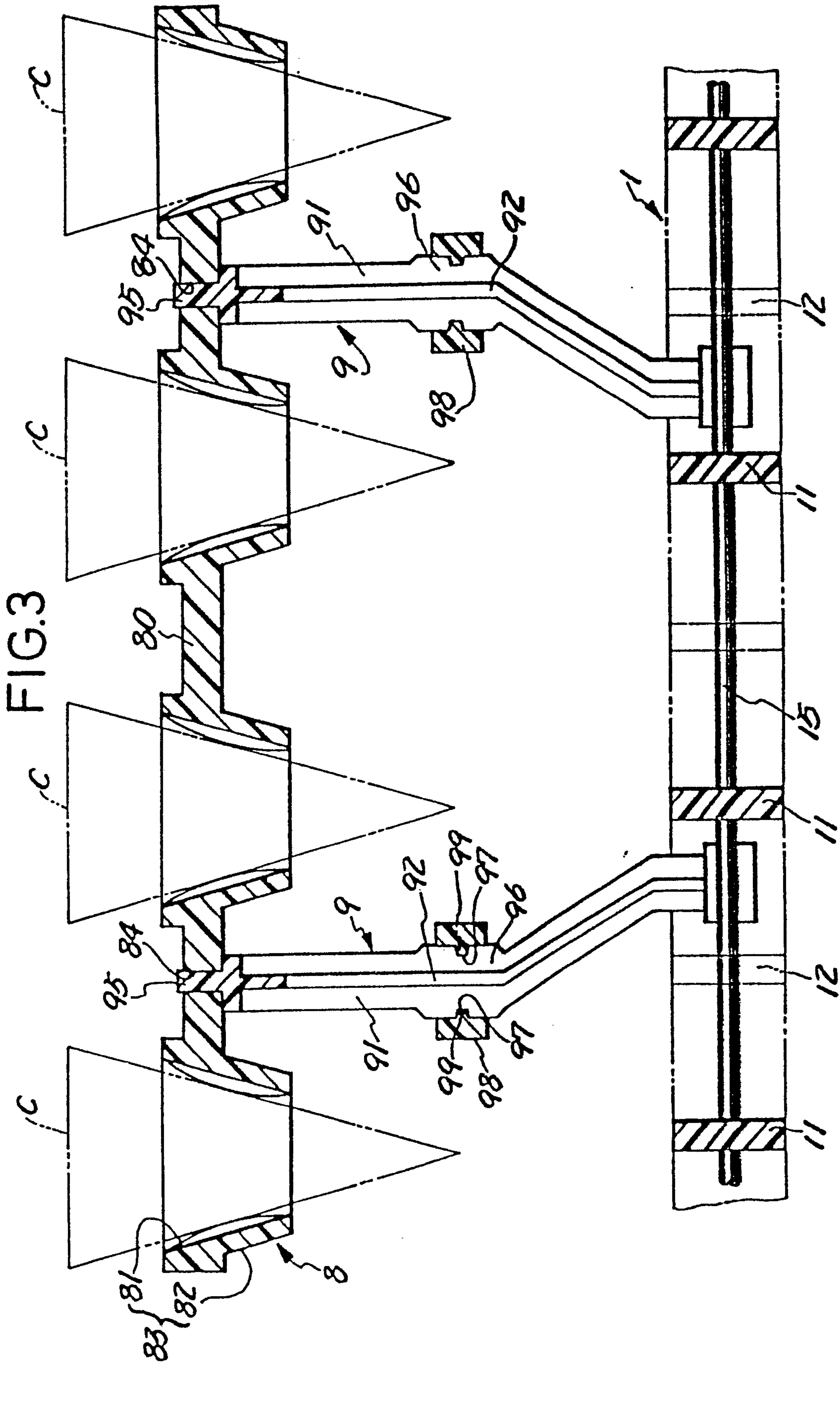


FIG.3

FIG.4

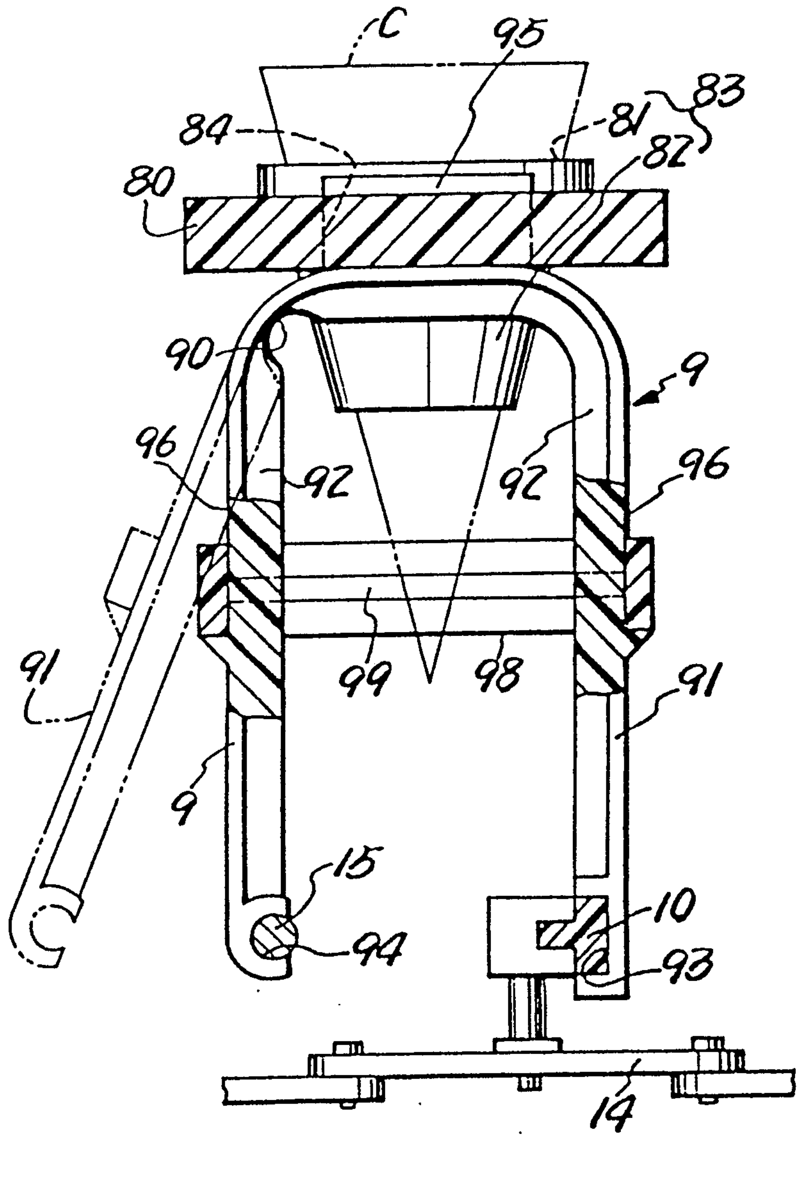

FIG. 5